# EUROPÄISCHE PATENTSCHRIFT

(11) **EP 1 781 003 B1**
(45) Veröffentlichungstag und Bekanntmachung des Hinweises auf die Patenterteilung: **07.06.2017**
(21) Anmeldenummer: 06019020.4
(22) Anmeldetag: 12.09.2006
(51) Int. Cl.: H04M 3/00, H04M 3/22, H04M 7/00

(54) **Verfahren und Vorrichtung zur Überwachung einer echobehafteten Kommunikationsverbindung**
Method and device for monitoring an echo affected communication link
Procédé et dispositif pour surveiller une ligne de communication affectée d'écho

(30) Priorität: 26.10.2005 DE 102005051129
(43) Veröffentlichungstag der Anmeldung: 02.05.2007
(73) Patentinhaber: Deutsche Telekom AG, 53113 Bonn (DE)
(72) Erfinder: Keßler, Steffen, Dipl.-Ing., 57299 Burbach (DE)
(74) Vertreter: Blumbach Zinngrebe

(56) Entgegenhaltungen:
- EP-A- 0 741 471
- US-A1- 2002 131 604
- "Network Quality Tests"[Online] 30. April 2004 (2004-04-30), XP002417667 Gefunden im Internet: URL:http://www.dspg.co.uk/index.htm> [gefunden am 2007-01-31]
- "NeTracker 100"[Online] 1. April 2004 (2004-04-01), XP002417382 Gefunden im Internet: URL:http://web.archive.org/web/20041102090 859/protokolltester.de/downloads/netracker 100.pdf> [gefunden am 2007-01-30]
- SETUP GMBH: "NeTracker 6000"[Online] 1. Mai 2006 (2006-05-01), XP002417383 Gefunden im Internet: URL:http://www.setup-pmt.de/downloads/netr acker6000setup.pdf> [gefunden am 2007-01-25]
- RENSHOU DAI:[Online] 2. Juni 2004 (2004-06-02), Seiten 1-4, XP002417384 Gefunden im Internet: URL:http://www.sageinst.com/downloads/inmd .pdf> [gefunden am 2007-01-25]

## Beschreibung

Die Erfindung betrifft ein Verfahren zur Überwachung einer echobehafteten Kommunikationsverbindung zwischen wenigstens zwei Teilnehmern sowie eine Echoüberwachungsvorrichtung, die insbesondere zur Durchführung eines solchen Verfahrens dient.

Bei der Übertragung von Sprachsignalen über ein Kommunikationsnetz, insbesondere von Sprachsignalen über das Internet, auch Voice over IP (VoIP) genannt, oder ein ATM-Netz kommt es zur Wahrnehmung von Echos, die um so deutlicher wahrgenommen werden, je größer die Verzögerung zwischen dem gesendeten Signal und dem von der Gegenstelle reflektierten Signal ist. Ein Echo wird im Wesentlichen durch zwei Größen, nämlich den Signalpegel und die Verzögerungszeit zwischen dem Sende- und Echosignal bestimmt. Je größer die Verzögerungszeit und der Signalpegel des Echosignals ist, desto deutlicher tritt das Echo ins Bewußtsein. Ein Echo entsteht überall dort, wo Sprache analog übertragen wird, wie zum Beispiel in den Kommunikationsendgeräten und auch in Einrichtungen zur digitalen Signalverarbeitung, die die Sprache codieren und decodieren. Anzumerken ist noch, dass Echos mit einer Verzögerungszeit von weniger als 20 ms von Gesprächspartnern nicht wahrgenommen werden.

Es sind Messsysteme bekannt, mit denen die Sprachqualität einer Kommunikationsverbindung gemessen werden kann. Dazu wird an einer Telekommunikations-Endstelle eine Sprachdatei von einem Simulator abgespielt und das dazugehörende Sendesignal aufgezeichnet. An der Empfangsstelle der Kommunikationsverbindung wird die Verbindung von einem weiteren Simulator lediglich angenommen. Der Simulator stellt darüber hinaus sicher, dass keine Störsignale eingekoppelt werden. Das reflektierte Sendesignal, d. i. das Echosignal, wird von dem Simulator empfangen und aufgezeichnet. Das Sendesignal und das Echosignal werden verglichen, um den Signalpegel und die Verzögerungszeit zwischen dem gesendeten Signal und dem Echosignal zu ermitteln. Ein Nachteil dieser Methode ist darin zu sehen, dass der Einfluss der beteiligten Endstellen auf das Sende- und Echosignal nicht erfasst werden kann, da die Endstellen während der Testphase durch Simulatoren ersetzt werden. Außerdem können Fehler, die nur zeitweise auftreten, schwer lokalisiert werden, da eine bestehende Verbindung, die ein Echo aufweist, nicht untersucht werden kann. Denn eine bestehende Verbindung muss zunächst unterbrochen werden, bevor die Simulatoren anstelle der Endgeräte an die zu überwachende Kommunikationsverbindung angeschlossen werden können. Zudem muss an jeder Endstelle der zu prüfenden Kommuniktionsverbindung jeweils ein Simulator angeschlossen werden.

Unter der URL "http://www.dspg.co.uk/index.htm" werden unter der Überschrift "Network Quality Tests" Testverfahren zum Ermitteln einer Netzwerkqualität beschrieben, wobei zwischen sogenannten intrusiven und nicht-intrusiven Tests unterschieden wird. Bei einem intrusiven Test werden an einer Stelle des Netzwerks Testsignale eingespeist und an der gleichen oder einer anderen Stelle des Netwerks Parametermessungen durchgeführt. Bei nicht-intrusiven Tests werden Verbindungsleitungen gemessen, ohne dass der Dienst beeinträchtigt oder unterbrochen wird, wobei Sprache aufgenommen wird und die in einem speziellen WAVE-Dateiformat aufgezeichneten Sprachdaten dann im Off-Line-Betrieb gemessen und analysiert werden.

Unter der URL "http://web.archive.org/web/20041102090859/ protokolltester.de/downloads/netracker 100.pdf" findet sich die Produktbeschreibung eines portablen Analyse- und Testgerätes, welches zum Durchführen einer intrusiven und nicht- intrusiven Analyse der Sprachqualität in einem Netzwerk ausgebildet ist.

In "Information in Sage's P 561 INMD Test" von D. Renshou (URL: "http://sageinst.com/downloads/inmd.pdf") wird ein nicht-intrusives Messgerät zur passiven Sprachqualitätsüberwachung auf Basis des Standards ITU-T P.561 beschrieben, welches für den Einsatz während des Betriebes vorgesehen ist. Für Echomessungen wird auf einem Hinkanal ein Referenzsignal und auf einem Rückkanal ein Echosignal gemessen. Ein vorhandenes Echo wird mittels Kreuzkorrelation des Echosignals und des entsprechenden Referenzsignals ermittelt.

Der vorliegenden Erfindung liegt demzufolge die Aufgabe zugrunde, ein Verfahren sowie eine Vorrichtung zur Verfügung zu stellen, mit denen die oben genannten Nachteile vermieden werden.

Ein Kerngedanke der Erfindung ist darin zu sehen, dass eine einzige Echoüberwachungsvorrichtung an eine beliebige Stelle einer Kommunikationsverbindung angeschlossen werden kann, um deren Echoverhalten überwachen zu können. Wichtig ist hierbei, dass die Kommunikationsendgeräte, die an der Kommunikationsverbindung beteiligt sind, nicht durch Simulatoren ersetzt werden müssen, so dass auch eine bestehende Kommunikationsverbindung überwacht werden kann. Das oben genannte technische Problem wird zum einen durch die Verfahrensschritte des Anspruchs 1 gelöst. Danach wird ein Verfahren zur Überwachung einer echobehafteten Kommunikationsverbindung zwischen wenigstens zwei Teilnehmern (10, 50) mittels einer einzigen Echoüberwachungsvorrichtung (70), die an einer vorbestimmten Schnittstelle (90) der Kommunikationsverbindung angeschlossen ist zur Verfügung gestellt. Zunächst wird eine Kommunikationsverbindung zwischen einem ersten und einem zweiten Teilnehmer (10, 50) aufgebaut, deren Echoverhalten überwacht werden soll. Audiosignale werden dann vom ersten Teilnehmer zum zweiten Teilnehmer übertragen, wobei Echosignale bei der Übertragung und am zweiten Teilnehmer entstehen können. An wenigstens einer vorbestimmten Schnittstelle (90) der Kommunikationsverbindung werden die über einen Hinkanal übertragenen Audiosignale und die über einen Rückkanal der Kommunikationsverbindung kommenden Echosignale in einer Aufzeichnungseinrichtung (73) aufgezeichnet. Die aufgezeichneten Audio- und Echosignale werden als Audiodaten und Echodaten in einer Audiodatei gespeichert. Die Audio- und Echosignale werden ausgekoppelt in analoge Signal umgewandelt und mittels der Aufzeichnungseinrichtung (73) in der Audiodatei gespeichert. Die wenigstens eine Audiodatei wird dann zur Bestimmung der Echoparameter einer Echoanalyse unterzogen.

Hierzu werden die in der wenigstens einen Audiodatei gespeicherten Audio- und Echodaten vorzugsweise in die entsprechenden analogen Signale umgewandelt und anschließend miteinander verglichen. Vorteilhafte Weiterbildungen sind Gegenstand der Unteransprüche.

Gemäß einer zweckmäßigen Weiterbildung werden RTP-Daten über die aufgebaute Kommunikationsverbindung übertragen. Die RTP (Real Time Protocol)-Daten werden an der vorbestimmten Schnittstelle aufgezeichnet und dann in der wenigstens einen Audiodatei gespeichert. Da die aufgezeichneten und gespeicherten RTP-Daten sowohl das gesendete Signal als auch das Echosignal enthalten, können diese direkt zur Bestimmung der Echoparameter einer Echoanalyse unterzogen werden.

Vorzugsweise handelt es sich bei der Audiodatei um eine sogenannte Wavedatei.
Wird zum Speichern der Audio- und Echodaten lediglich eine Audiodatei verwendet, so ist eine getrennte Speicherung der Daten erforderlich, um eine Zuordnung der Audiodaten zum Hinkanal und der Echodaten zum Rückkanal zuordnen zu können. Mit anderen Worten werden die Audio- und Echodaten wie ein Stereosignal in der Wavedatei abgelegt.

Alternativ können aufgezeichneten Audiodaten und Echodaten in zwei verschiedenen Audiodateien gespeichert werden.

Zur Bestimmung der Echoparameter müssen in diesem Fall die beiden Audiodateien miteinander verglichen werden. Nachteilig hierbei ist allerdings, dass die Zeitsynchronisation zwischen den beiden erstellten Audiodateien schwierig ist.

Um störende Geräusche vom zweiten Teilnehmer in der Kommunikationsverbindung ausschließen zu können, wird jeder Mikroföneingang des zweiten Teilnehmers deaktiviert. Hierzu kann beispielsweise einfach der Telefonhörer vom Endgerät abgezogen werden. Auf diese Weise werden vom zweiten Teilnehmer nur Echosignale des vom ersten Teilnehmer gesendeten Audiosignale reflektiert.

Handelt es sich bei der Kommunikationsverbindung um eine Verbindung über das ISDN, so können die Audio- und Echodaten an einer S-Schnittstelle ausgekoppelt werden.

Verläuft hingegen die Kommunikationsverbindung durch das Internet, so können die Audio- und Echodaten über eine Ethernet- oder WAN-Schnittstelle ausgekoppelt werden.

Das oben genannte technische Problem wird zum anderen durch die Merkmale des Anspruchs 9 gelöst.

Danach ist eine Echoüberwachungsvorrichtung vorgesehen, die eine Schnittstelle zum Anschalten an ein Kommunikationsnetz, zum Beispiel das ISDN oder Internet aufweist. Ferner ist eine Einrichtung zum getrennten Empfangen von Audio- und Echosignalen vorgesehen. Getrennt bedeutet in diesem Fall, dass Audio- und Echosignale über einen Hin- beziehungsweise Rückkanal übertragen werden und demzufolge hinsichtlich der durchzuführenden Echoanalyse als separate Daten in einer einzigen Datei oder in zwei verschiedenen Dateien gespeichert werden müssen. Ferner ist eine Einrichtung zum getrennten Speichern von empfangenen Audio- und Echodaten in wenigstens einer Audiodatei, insbesondere einer Wavedatei vorgesehen. Zusätzlich ist eine Einrichtung zum Ermitteln der Echoparameter aus den in der wenigstens einen Audiodatei gespeicherten Audio- und Echodaten vorgesehen.

Die Erfindung wird anhand eines Ausführungsbeispiels in Verbindung mit den Zeichenungen näher erläutert. Es zeigen:
- Fig. 1: eine beispielhafte Kommunikationsverbindung, an die ein Echoüberwachungssystem angeschlossen ist, und
- Fig. 2: ein Blockschaltbild des in Fig. 1 gezeigten Echoüberwachungssystems.

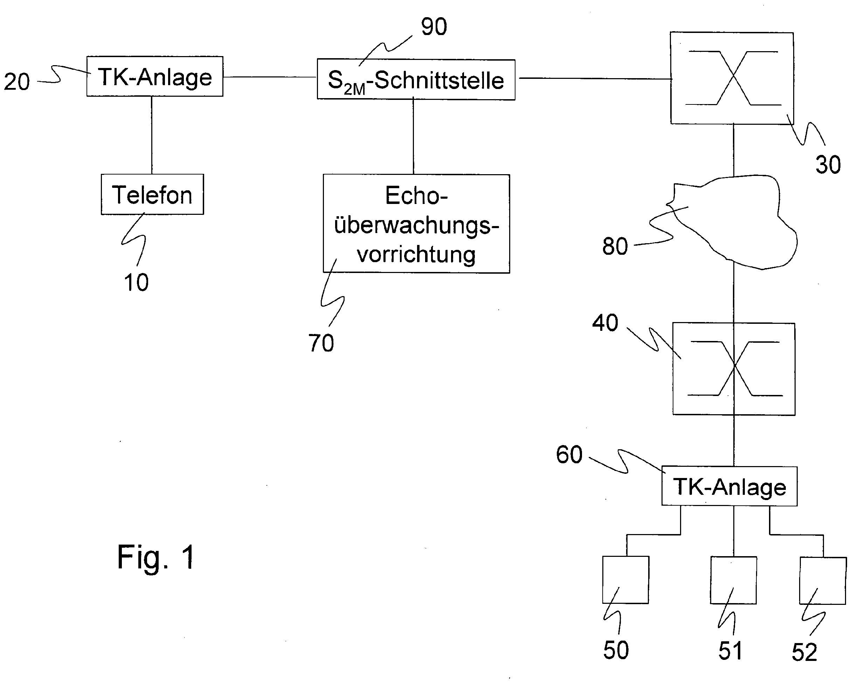

Figur 1 zeigt eine beispielhafte zwischen einer Endstelle A und einer Endstelle B hergestellte Kommunikationsverbindung über das ISDN, über die die Endstelle A Audiodaten zur Endstelle B übertragen kann. Die Endstelle A weist ein Endgerät 10, beispielsweise ein ISDN-Telefon auf, welches über eine TK-Anlage 20 an die Kommunikationsverbindung angeschlossen werden kann. Die Endstelle B weist beispielsweise drei Endgeräte 50, 51 und 52 auf, die jeweils an einer bei einem Kunden aufgestelltem TK-Anlage 60 angeschlossen sind. Die Kommunikationsverbindung verläuft beispielsweise durch zwei Teilnehmer-Vermittlungsknoten 30 und 40 und durch ein schematisch dargestelltes Weiterverkehrsnetz 80. An dieser Stelle sei angemerkt, dass der Abschnitt der Kommunikationsverbindung, welcher zwischen den beiden Teilnehmer-Vermittlungsknoten 30 und 40 verläuft, eine ATM-Verbindung sein kann. Die dargestellte ATM-Technologie ist nur ein beispielhaftes System für die Audioübertragung. Alternativ könnte eine Verbindung auch über das Internet erfolgen. Bei der ATM-Technologie werden die beispielsweise am Endgerät 10 eingegebenen Audiosignale in digitale Daten umgesetzt, auf Zellen vorbestimmter Länge verteilt und zu einem Endgerät der Endstelle B übertragen. Im vorliegenden Beispiel sei angenommen, dass Audiosignale vom Endgerät 10 über die TK-Anlage 20 beispielsweise zu der an der TK-Anlage 60 angeschlossenen Endeinrichtung 50 übertragen werden sollen. Um zu vermeiden, dass über das Endgerät 50 Geräusche in die Verbindung eingekoppelt werden, sind die Mikrofoneingänge des Endgerätes 50 deaktiviert, indem beispielsweise der Telefonhörer abgezogen ist. Um die Echoeigenschaft der aufgebauten Kommunikationsverbindung überwachen zu können, kann an eine beliebige Stelle der Verbindung, im vorliegenden Beispiel an eine S_{2M}-Schnittstelle 90, die sich zwischen der TK-Anlage 20 und dem Teilnehmervermittlungsknoten 30 befindet, ein Echoüberwachungsvorrichtung 70 angeschlossen werden.

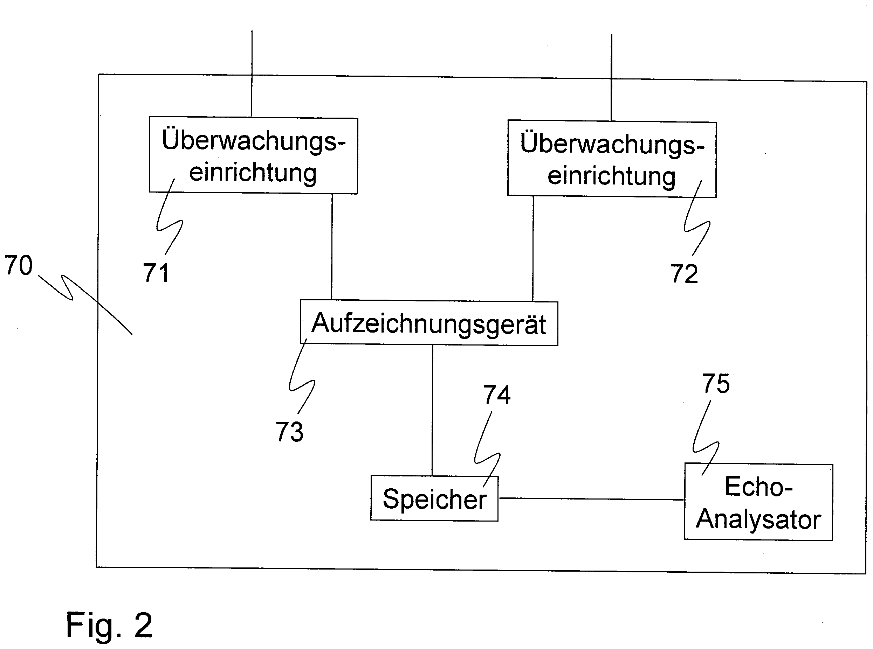

An dieser Stelle sei darauf hingewiesen, dass die an der S_{2M}-Schnittstelle 90 eintreffenden Audio- und Echosignale als Audio- und Echodaten vorliegen. Demzufolge weist, wie in Fig. 2 gezeigt, die Echoüberwachungsvorrichtung 70 zwei getrennte Überwachungseinrichtungen 71 und 72 auf, welche beispielsweise ähnlich dem bekannten ISDN-Zugangsprüfer, der unter der Bezeichnung Astroline MPRA oder Argus 25 bekannt ist, ausgebildet sind. Beispielsweise werden die von dem Endgerät 10 kommenden Audiodaten an der S_{2M}-Schnitttstelle 90 über die Überwachungseinrichtung 71 ausgekoppelt, während die an dem Endgerät 50 reflektierten Echodaten an der S_{2M}-Schnittstelle mittels der Überwachungseinrichtung 72 ausgekoppelt werden. Die Audio- und Echodaten werden in der Überwachungseinrichtung 71 und in der Überwachungseinirchtung 72 decodiert und in analoge Signale umgesetzt. Die analogen Ausgänge der Überwachungseinrichtungen 71 und 72 sind mit den analogen Eingängen einer Audioaufzeichnungseinrichtung 73 verbunden, die aus den analogen Signalen digitale Audio- und Echodaten erzeugt und diese in zwei verschiedenen Wavedateien oder als Stereosignale getrennt in einer einzigen Wavedatei in einer Speichereinrichtung 74 abspeichert. Mit anderen Worten wird eine Stereo-Wavedatei erzeugt, in der die Audiodaten, die auf dem Hinkanal der Kommunikationsverbindung empfangen werden beispielsweise einem linken Kanal zugeordnet werden, während die auf dem Rückkanal der Kommunikationsverbindung ausgekoppelten Echosignale dem rechten Kanal zugeordnet werden. Auf diese Weise ist es möglich, herkömmliche Aufzeichnungsgeräte, die Stereosignale in einer Wavedatei ablegen können, auch für die Echoüberwachung einer Kommunikationsverbindung zu verwenden.

Die in der Wavedatei, welche im Speicher 74 abgelegt ist, enthaltenen Audio- und Echodaten werden einem Echoanalysator 75 zugeführt, der durch einen Vergleich der Audio- und Echodaten die Echoparameter ermittelt. Der Echoanalysator kann hardwaremäßig oder durch eine Software, beispielsweise die OPERA-Software, realisiert sein. Verfahren und Vorrichtungen zur Bestimmung der Echoparameter aus dem Vergleich von einem gesendeten und einem empfangenen Signal sind hinlänglich bekannt und nicht Gegenstand der Erfindung.

An dieser Stelle sei erwähnt, dass die Funktionskomponenten 71 bis 75 der Echoüberwachungsvorrichtung 70 getrennte Baueinheiten oder aber als einheitliches Gerät implementiert sein können.

An dieser Stelle sei angemerkt, dass als Audioaufzeichnungsgerät 73 beispielsweise der bekannte Windows-Audiorekorder oder auf dem Markt erhältliche USB-Audioadapter verwendet werden können, die zwei getrennte Kanäle aufnehmen können. Wird der Windows-Audiorekorder verwendet, werden die von den Überwachungseinrichtungen 71 und 72 kommenden analogen Signale über einen Mikrofonstereoeingang oder zwei getrennte Monomikrofoneingänge aufgezeichnet und in einer oder zwei Wavedateien abgelegt.

## Patentansprüche

1. Verfahren zur Überwachung einer echobehafteten Kommunikationsverbindung zwischen wenigstens zwei Teilnehmern (10, 50) mittels einer einzigen Echoüberwachungsvorrichtung (70), die an einer vorbestimmten Schnittstelle (90) der Kommunikationsverbindung angeschlossen ist, mit folgenden Verfahrensschritten:
eine Kommunikationsverbindung wird zwischen einem ersten und einem zweiten Teilnehmer (10, 50) aufgebaut;
Audiosignale werden vom ersten Teilnehmer zum zweiten Teilnehmer übertragen;
an der vorbestimmten Schnittstelle (90) der Kommunikationsverbindung werden die über einen Hinkanal übertragenen Audiosignale und die über einen Rückkanal der Kommunikationsverbindung kommenden Echosignale in einer Aufzeichnungseinrichtung (73) der Echoüberwachungsvorrichtung (70) aufgezeichnet;
die aufgezeichneten Audio- und Echosignale werden als Audiodaten und Echodaten in einer Audiodatei gespeichert, wobei die Audiodaten und Echodaten getrennt in der Audiodatei gespeichert werden, und
wobei die Audio- und Echosignale ausgekoppelt werden, in analoge Signale umgewandelt und mittels der Aufzeichnungseinrichtung (73) in der Audiodatei gespeichert werden; und
die in der Audiodatei gespeicherten Audio- und Echodaten werden zur Bestimmung der Echoparameter in einem Echoanalysator (75) der Echoüberwachungsvorrichtung (70) einer Echoanalyse unterzogen.

2. Verfahren nach Anspruch 1,
**dadurch gekennzeichnet, dass**
RTP (Real Time Protocol)-Daten aufgezeichnet und in wenigstens einer Audiodatei gespeichert werden.

3. Verfahren nach Anspruch 1 oder 2,
**dadurch gekennzeichnet, dass**
die Audiodatei eine Zweikanal-Wavedatei ist.

4. Verfahren nach einem der Ansprüche 1 bis 3,
**dadurch gekennzeichnet, dass**
der zweite Teilnehmer eine Endeinrichtung mit deaktiviertem Mikrofoneingang aufweist.

5. Verfahren nach einem der Ansprüche 1 bis 4,
**dadurch gekennzeichnet, dass**
die Kommunikationsverbindung eine ISDN-Verbindung und die vorbestimmte Schnittstelle eine S-Schnittstelle ist.

6. Verfahren nach einem der Ansprüche 1 bis 4,
**dadurch gekennzeichnet, dass**
die Kommunikationsverbindung einer Internetverbindung und die vorbestimmte Schnittstelle eine Ethernet- oder WAN-Schnittstelle ist.

## Claims

1. A method for monitoring an echo affected communication link between at least two subscribers (10, 50) by means of a single echo monitoring device (70) that is connected to a predetermined interface (90) of the communication link, comprising the following method steps:
a communication link is established between a first subscriber and a second subscriber (10, 50);
audio signals are transmitted from the first subscriber to the second subscriber;
at the predetermined interface (90) of the communication link, the audio signals transmitted over a forward channel and the echo signals arriving via a return channel of the communication link are recorded in a recording means (73) of the echo monitoring device (70);
the recorded audio and echo signals are stored as audio data and echo data in an audio file, wherein the audio data and the echo data are stored separately in the audio file, and wherein the audio and echo signals are extracted, converted into analogue signals and recorded in the audio file by the recording means (73); and
the audio and echo data stored in the audio file are subjected to echo analysis in an echo analyser (75) of the echo monitoring device (70), in order to determine the echo parameters.

2. The method according to claim 1, **characterized in that** RTP (Real Time Protocol) data are recorded and stored in at least one audio file.

3. The method according to claim 1 or 2, **characterized in that** the audio file is a two channel wave file.

4. The method according to any one of claims 1 to 3, **characterized in that** the second subscriber has a terminal device with deactivated microphone input.

5. The method according to any one of claims 1 to 4, **characterized in that** the communication link is an ISDN link, and the predetermined interface is an S interface.

6. The method according to any one of claims 1 to 4, **characterized in that** the communication link is an Internet link and the predetermined interface is an Ethernet interface or WAN interface.

## Revendications

1. Procédé de surveillance d'une liaison de communication à écho entre au moins deux abonnés (10, 50) au moyen d'un seul dispositif de surveillance d'écho (70), qui est raccordé à une interface (90) prédéfinie de la liaison de communication, comprenant les étapes de procédé suivantes :
une liaison de communication est établie entre un premier et un deuxième abonné (10, 50) ;
des signaux audio sont transmis du premier abonné au deuxième abonné ;
au niveau de l'interface (90) prédéfinie de la liaison de communication, les signaux audio transmis par l'intermédiaire d'un canal aller et les signaux d'écho arrivant par l'intermédiaire d'un canal retour de la liaison de communication sont enregistrés dans un système d'enregistrement (73) du dispositif de surveillance d'écho (70) ;
les signaux audio et d'écho enregistrés sont mis en mémoire en tant que données audio et données d'écho dans un fichier audio, les données audio et les données d'écho étant séparées et mises en mémoire dans le fichier audio, et les signaux audio et d'écho étant extraits, convertis en signaux analogiques et mis en mémoire dans le fichier audio au moyen du dispositif d'enregistrement (73) ; et
les données audio et d'écho mises en mémoire dans le fichier audio sont soumises à une analyse d'écho pour déterminer les paramètres d'écho dans un analyseur d'écho (75) du dispositif de surveillance d'écho (70).

2. Procédé selon la revendication 1, **caractérisé en ce que** des données RTP (protocole en temps réel) sont enregistrées et mises en mémoire dans au moins un fichier audio.

3. Procédé selon la revendication 1 ou 2, **caractérisé en ce que** le fichier audio est un fichier Wave bicanal.

4. Procédé selon l'une quelconque des revendications 1 à 3, **caractérisé en ce que** le deuxième abonné comprend un dispositif d'émission présentant une entrée microphone désactivée.

5. Procédé selon l'une quelconque des revendications 1 à 4, **caractérisé en ce que** la liaison de communication est une liaison ISDN et l'interface prédéfinie est une interface S.

6. Procédé selon l'une quelconque des revendications 1 à 4, **caractérisé en ce que** la liaison de communication est une liaison Internet et l'interface prédéfinie est une interface Ethernet ou WAN.
